# EUROPÄISCHE PATENTSCHRIFT

(11) **EP 0 857 648 B1**
(45) Veröffentlichungstag und Bekanntmachung des Hinweises auf die Patenterteilung: **15.01.2003**
(21) Anmeldenummer: 98101864.1
(22) Anmeldetag: 04.02.1998
(51) Int. Cl.: B64C 1/00, B64C 35/00, B64C 39/08

(54) **Flugzeug für Personen- und/oder Frachttransport**
Aircraft for passengers and freight
Aéronef pour le transport des passagers et du fret

(30) Priorität: 05.02.1997 DE 19704188; 11.03.1997 DE 19709921
(43) Veröffentlichungstag der Anmeldung: 12.08.1998
(73) Patentinhaber: Vassiliev, Anatoli J., Prof. Dr., 50769 Köln (DE); Eibel, Karl-Heinz, 50169 Kerpen (DE)
(72) Erfinder: Vassiliev, Anatoli J., Prof. Dr., 50769 Köln (DE); Eibel, Karl-Heinz, 50169 Kerpen (DE)
(74) Vertreter: Müller-Gerbes, Margot, Dipl.-Ing.

(56) Entgegenhaltungen:
- WO-A-86/03172
- FR-A- 2 675 114

## Beschreibung

Die Erfindung betrifft ein Flugzeug für Personen- und/oder Frachttransport auf Basis eines bekannten Flugzeugbaumusters mit einem Rumpf mit Nasensektion, Mittelsektion und Schwanzsektion und an der Mittelsektion nahe des Schwerpunktes des Flugzeuges angebrachten und entsprechend des erforderlichen Auftriebs berechneten Tragflächen und im Bereich der Schwanzsektion angeordneten Höhen- und/oder Seitenleitwerken zur Erzeugung von Stabilisierungs- und Steuermomenten.

Flugzeuge der eingangs genannten Art stellen eine Standardbauweise dar und sind in verschiedenen als Personen- und/oder Frachtflugzeuge eingesetzten Baumustern unterschiedlichster Größe bekannt.

Im Zuge stetig steigender Anforderungen an die Wirtschaftlichkeit derartiger Personen- und/oder Transportflugzeuge sowie eines stetig steigenden Flugverkehrsaufkommen ist man bestrebt, die Flugzeuge hinsichtlich ihrer Transportkapazität, d. h. der Zahl der zu befördernden Passagiere bzw. ihrer Nutzlast für Fracht zu vergrößern.

Dies geschieht bisher im wesentlichen dadurch, daß Flugzeuge mit stetig größer werdenden Rumpfabmessungen mit entsprechend größerer Transportkapazität neu entwickelt werden, die für die Bereitstellung des erforderlichen Auftriebs mit entsprechend stetig größeren Tragflächen ausgerüstet werden.

Hierbei ist insbesondere die Neuberechnung und Neukonstruktion der Tragflächen eines Flugzeuges mit extrem hohen Kosten und langjähriger Entwicklungsarbeit verbunden.

Eine weitere Möglichkeit zur Steigerung der Transportkapazität wird bisher dadurch erreicht, daß ein bekanntes Flugzeugbaumuster durch Verlängerung des Rumpfes sowohl vor als auch hinter dem Schwerpunkt des als Ausgangsbasis dienenden bekannten Flugzeugbaumusters hinsichtlich seiner Transportkapazität verbessert wird. Hierbei werden auch die erforderlichen vergrößerten Tragflächen für die Erzeugung des benötigten Auftriebes neu berechnet und konstruiert, wodurch wiederum sehr hohe Kosten verursacht werden, da die Neukonstruktion von Tragflächen und ihre Berechnung sehr hohen Aufwand mit sich bringt. Ein derartiges Flugzeug fällt unter den Wortlauf des Oberbegriffs des Anspruchs 1.

Ein weiterer wesentlicher Nachteil dieser Art der Erhöhung der Tragfähigkeit eines bekannten Flugzeugbaumusters liegt neben den hohen Kosten in der konstruktiven Begrenzung der Möglichkeiten für die Vergrößerung der Tragflächen und die Verlängerung des Rumpfes hinter dem Schwerpunkt, d. h. in Richtung der Schwanzsektion des Rumpfes, da hierdurch der Startwinkel des Flugzeuges verringert wird, so daß ein derartiges Flugzeug unbrauchbar lange Startpisten benötigen würde.

Die Erfindung hat sich daher die Aufgabe gestellt, ein Flugzeug mit vergrößerter Transportkapazität zu schaffen, welches mit möglichst geringen Kosten und innerhalb kurzer Zeit produktionsreif gemacht werden kann, wobei gleichzeitig auch gute Flugeigenschaften erzielt werden sollen.

Diese Aufgabe wird mit einem Flugzeug gemäß den kennzeichnenden Merkmalen des Patentanspruches 1 gelöst.

Vorteilhafte Ausgestaltungen sind den Unteransprüchen entnehmbar.

Die erfindungsgemäße Lösung der gestellten Aufgabe sieht vor, daß die Zusatzsektion in Flugrichtung gesehen vor den als Haupttragflächen dienenden Tragflächen des Flugzeugbaumusters mit als Zusatztragflächen dienenden Tragflächen ausgerüstet ist, wobei als Zusatztragflächen durchkonstruierte und berechnete Tragflächen geeigneter Größe eines bekannten Flugzeugbaumusters eingesetzt sind.

Erfindungsgemäß kann somit die Verlängerung des Rumpfes zur Erhöhung der Transportkapazität des Flugzeuges durch den Einbau einer zusätzlichen Rumpfsektion als Zusatzsektion ausschließlich vor dem Schwerpunkt des als Ausgangsbasis dienenden bekannten Flugzeugbaumusters realisiert, so daß gegenüber dem als Ausgangsbasis dienenden Flugzeugbaumuster keine Verringerung des Startwinkels hingenommen werden muß. Des weiteren bleiben die Tragflächen des als Ausgangsbasis dienenden Flugzeuges auch beim erfindungsgemäßen Flugzeug unverändert erhalten und dienen diesem als Haupttragflächen. Die infolge der gestiegenden Transportkapazität erforderliche Vergrößerung der Tragflächen zur Schaffung eines ausreichenden Auftriebes wird erfindungsgemäß durch zu den vorhandenen Tragflächen zusätzliche, als Zusatztragflächen bezeichnete Tragfläche, die an der Zusatzsektion in Flugrichtung gesehen vor den Haupttragflächen aufgebracht sind, erreicht.

Flugzeug mit zwei Tragflächenpaaren in Flugrichtung gesehen hintereinander sind vom Prinzip her bereits bekannt, wobei nur beispielhaft auf die US 4,390,150 verwiesen wird.

Die Erfindung lehrt jedoch, daß insbesondere zur Lösung der eingangs gestellten Aufgabe, ein mit besonders niedrigen Entwicklungskosten und in kurzer Zeit produktionsreif zu machendes Flugzeug vergrößerter Transportkapazität herzustellen, das aus bereits vorhandenen und berechneten und durchkonstruierten Bauteilen für den Rumpf und insbesondere die beiden Tragflächenpaare zusammengesetzt ist. Es werden als Zusatztragflächen durchkonstruierte und berechnete Tragflächen geeigneter Größe eines bekannten Flugzeugbaumusters eingesetzt. Gleichzeitig sind an den Haupttragflächen gegenüber dem als Ausgangsbasis dienenden Flugzeugbaumuster keinerlei Veränderungen notwendig. Je nach Umfang der Steigerung der Transportkapazität des erfindungsgemäßen Flugzeuges können die benötigten zusätzlichen Tragflächen von einem bekannten Flugzeugbaumuster geeigneter Größe vorgesehen werden. Es können als Zusatztragflächen auch die als Haupttragflächen am erfindungsgemäßen Flugzeug eingesetzten Tragflächen infrage kommen.

Die Erfindung lehrt somit, daß ein auf diese Weise mittels einer eingefügten Zusatzsektion mit Zusatztragflächen mit einem verlängerten Rumpf ausgestattetes Flugzeug auf Basis eines an sich bekannten Flugzeugbaumusters trotz seiner gesteigerten Transportkapazität hinsichtlich der Größe und Formgebung seiner Haupttragflächen unverändert verbleiben kann. Die erforderliche Tragflächenvergrößerung infolge der gestiegenen Transportkapazität des Flugzeuges wird allein dadurch bewirkt, daß an der Zusatzsektion Zusatztragflächen vor den Haupttragflächen befestigt werden, wobei hier ein Rückgriff auf bereits berechnete und erprobte Tragflächen des weiteren bekannten Flugzeugbaumusters geeigneter Größe erfolgt. Da somit sowohl die Haupttragflächen als auch die Zusatztragflächen von bereits bekannten Flugzeugbaumustern entnommen werden, ist beim erfindungsgemäßen Flugzeug keine erneute aufwendige Konstruktion oder Neuberechnung des Flügelprofils der Tragflächen erforderlich, wodurch eine wesentliche Reduzierung des Aufwandes gegenüber den bisher bekannten Flugzeugen mit gesteigerter Transportkapazität erzielt wird. Diese Aufwandsverminderung wird noch dadurch erhöht, daß nicht nur die bereits durchkonstruierten und berechneten Tragflächen, sondern auch die hieran angepaßten und erprobten Betriebsausrüstungen aus den die Haupt- und Zusatztragflächen liefernden bekannten Flugzeugbaumustern nahezu vollständig weiter verwendet werden können.

Eine vorteilhafte Ausführungsform der Erfindung sieht vor, daß der Rumpf des Flugzeuges modulartig zusammengesetzt ist und ein die Nasensektion bildendes Modul, ein die Schwanzsektion bildendes Modul, mehrere die Mittelsektion bildende Module und ein die Zusatzsektion bildendes Modul umfaßt, wobei an einem der die Mittelsektion bildenden Module die Haupttragflächen befestigt sind. Die Verlängerung des Rumpfes eines bekannten Flugzeugbaumusters durch Einbau der Zusatzsektion kann durch den modulartigen Aufbau des Rumpfes auf einfachste Weise erfolgen. Bevorzugt wird bei der Verlängerung des modulartig aufgebauten Rumpfes als Zusatzsektion ein geeignetes Rumpfmodul des als Ausgangsbasis dienenden bekannten Flugzeugbaumusters verwendet, vorteilhaft das mit den Befestigungselementen für die Tragflächen versehene, so daß die Befestigung der Zusatztragflächen an der von diesem Rumpfmodul gebildeten Zusatzsektion auf einfache Weise erfolgen kann und hierdurch weitere Kosten eingespart werden können.

Im Rahmen der Erfindung wurde darüber hinaus gefunden, daß ein besonders geringer Strömungswiderstand und besonders geringe gegenseitige Beeinflussung der Zusatztragflächen und der Haupttragflächen voneinander erreicht wird, wenn die Zusatztragflächen möglichst weit vor den Haupttragflächen angeordnet sind. Gemäß einem Vorschlag der Erfindung kann dies dadurch erreicht werden, daß die Zusatzsektion mit den Zusatztragflächen unmittelbar an die Nasensektion anschließend ausgebildet ist.

Durch die in den Rumpf vor dem Schwerpunkt eingefügte Zusatzsektion und die daran befestigten Zusatztragflächen wird der Schwerpunkt des Flugzeuges in Flugrichtung gesehen nach vorne verschoben, wobei jedoch die Zusatztragflächen zusammen mit den unveränderten Haupttragflächen den erforderlichen Auftrieb erzeugen und die erfolgte Schwerpunktverlagerung ausgleichen.

Um bei dem erfindungsgemäß vorgeschlagenen Flugzeug das von den bekannten Flugzeugbaumustern her übliche und bewährte horizontale Startverfahren nach wie vor beibehalten zu können, wird vorgeschlagen, daß die wirksame Flügelfläche der Zusatztragflächen kleiner bis höchstens gleich groß wie die wirksame Flügelfläche der Haupttragflächen ist. Hieraus ergibt sich, daß die Zusatztragflächen entweder von einem kleineren Flugzeugbaumuster als dem als Ausgangsbasis dienenden Flugzeugbaumuster entnommen werden oder aber zur Erzielung einer höchstens gleich großen wirksamen Flügelfläche den Haupttragflächen entsprechen.

In jedem Fall verursachen jedoch die Zusatztragflächen einen außerordentlich geringen induktiven Widerstand gegenüber der sie umströmenden Luftströmung, da sie "aerodynamisch rein" ausgeführt werden können, d. h. alle die Strömung behindernden Anbauten, wie Pylonen, Triebwerke usw. werden von den Zusatztragflächen entfernt.

Das auf diese Weise geschaffene erfindungsgemäße Flugzeug weist vor den Haupttragflächen angeordnete Zusatztragflächen auf, die mindestens 15 %, vorzugsweise mindestens 20 % zum Gesamtauftrieb des Flugzeuges beitragen. Somit unterscheidet sich das erfindungsgemäße Flugzeug auch erheblich von Versuchsweise bekanntgewordenen sogenannten "Entenflugzeugen", bei denen im vorderen Rumpfbereich angeordnete Vorderflügel lediglich die Rolle eines Vorderleitwerkes zur Schaffung von Steuermomenten übernehmen und nur einen sehr geringen Beitrag zum Gesamtauftrieb leisten.

Die vor den Haupttragflächen angeordneten und an der Zusatzsektion befestigten Zusatztragflächen können gemäß einer weiteren Ausgestaltung der Erfindung nicht nur zur Erzeugung des notwendigen Auftriebes gemeinsam mit den Haupttragflächen verwendet werden, sondern können darüber hinaus auch Steuermomente für das Flugzeug erzeugen. Zu diesem Zweck wird vorgeschlagen, daß die Zusatztragflächen in Flugrichtung gesehen an ihrer Vorderkante und/oder Hinterkante mit über die gesamte Breite der Zusatztragflächen verlaufenden Steuerklappen ausgerüstet sind. Beispielsweise ist es möglich, die an den Zusatztragflächen ausgebildeten Flügelklappen und Vorflügel für die Erzeugung von Auftriebs- und Steuermomenten zu verwenden. Auch ist es möglich, anstelle der üblicherweise an der Vorderkante der Tragflächen installierten Vorflügel sogenannte Krüggerklappen zu installieren, mit denen Steuermomente für die Manövrierung des erfindungsgemäßen Flugzeuges erzeugbar sind.

Die mit Hilfe der Zusatztragflächen und der an ihnen vorhandenen Klappen erzeugbaren Steuermomente können je nach Größe der Zusatztragflächen unterstützend für das üblicherweise im Bereich der Schwanzsektion angeordnete Höhenleitwerk des Flugzeuges wirken, wie es auch möglich ist, bei entsprechend großen Zusatztragflächen auf das Höhenruder im Bereich der Schwanzsektion des Flugzeuges zu verzichten und dessen Steuermomente vollständig von den Klappen der Zusatztragflächen zu erzeugen. Hierdurch wird eine weitere Verringerung des induktiven Widerstandes des erfindungsgemäßen Flugzeuges ermöglicht.

In jedem Fall wird jedoch durch die Erzeugung von Steuermomenten im Bereich der Zusatztragflächen die Manövrierfähigkeit des erfindungsgemäßen Flugzeuges gegenüber einem konventionell aufgebauten Flugzeug erheblich gesteigert.

Neben dieser Steigerung der Manövrierfähigkeit erfährt das erfindungsgemäße Flugzeug auch eine Vergrößerung seiner Reisegleitzahl um mindestens 20 bis 25 %, da die Ausbildung der Zusatztragflächen eine wesentlich vergrößerte Flügelstreckung und dadurch eine Verminderung des induktiven Widerstandes bewirkt. Als weiterer wesentlicher Vorteil ist zu nennen, daß die Zusatztragflächen im vorderen Bereich des Flugzeuges einen positiven Auftrieb erzeugen, statt eines negativen Auftriebes des Schwanzleitwerkes, wie es bei konventionell aufgebauten Flugzeugen der Fall ist. Auf diese Weise kann das Ausbalancieren des Flugzeuges im Reiseflug wesentlich vereinfacht werden und Gleitzahlverluste durch unnötige Erzeugung von Balancemomenten, die sich nachteilig auf den Treibstoffverbrauch auswirken, werden verringert.

Auch das Austrimmen und Balancieren des erfindungsgemäßen Flugzeuges für die Startkonfiguration wird durch die im vorderen Rumpfbereich angeordneten Zusatztragflächen und den hier erzeugten Auftrieb wesentlich erleichtert, die Startgleitzahl erhöht und Gleitzahlverluste verringert. Es hat sich von daher im Rahmen der Erfindung gezeigt, daß das erfindungsgemäß vorgeschlagene Flugzeug mit Hilfe der im vorderen Rumpfbereich angebrachten Zusatztragflächen mit einer wesentlich verkürzten Start- und Landebahn aufgrund der Verminderung von Auftriebsverlusten auskommt, was die Wirtschaftlichkeit des erfindungsgemäßen Flugzeuges weiter steigert.

Als weiteren wesentlichen Vorteil weist das erfindungsgemäß mit einem vor dem Schwerpunkt mittels einer Zusatzsektion verlängerten Rumpf und vor dem Schwerpunkt angeordneten Zusatztragflächen versehene Flugzeug ein erheblich erhöhtes Sicherheitsniveau auf, da die Zusatztragflächen eine wesentliche Erhöhung der Trudelsicherheit und eine Verringerung der kritischen Geschwindigkeit erlauben, gleichzeitig aber die Dämpfung von Schwingungen des erfindungsgemäßen Flugzeuges während des Fluges z. B. bei großen Verwirbelungen der Atmosphäre gesteigert wird.

Da keine Vergrößerung der bekannten und beim erfindungsgemäßen Flugzeug als Haupttragflächen und Zusatztragflächen eingesetzten Tragflächen erforderlich ist, wird auch das spezifische Konstruktionsgewicht dieser Tragflächen nicht erhöht, so daß das spezifische Gewicht pro m² Gesamtflügelfläche verringert wird, was insgesamt weitere Kosten bei der Herstellung des Flugzeuges einspart.

Eine weitere Steigerung der Transportkapazität des erfindungsgemäßen Flugzeuges kann dadurch bewirkt werden, daß der Rumpf desselben zumindest bereichsweise und vorzugsweise symmetrisch zum Schwerpunkt zweigeschossig ausgebildet und auf diese Weise vergrößert ist. Hierfür weist der Rumpf ein das zweite Geschoß bildendes Oberdeck auf, welches vorteilhaft auf Basis von Rumpfmodulen eines bekannten kleineren oder gleich großen Flugzeugbaumuster im Vergleich zu dem als Ausgangsbasis dienenden Flugzeugbaumuster aufgebaut ist. Auf diese Weise werden wiederum die notwendigen Konstruktions- und Baukosten niedrig gehalten. Die Anordnung des Oberdecks symmetrisch zum Schwerpunkt des erfindungsgemäßen Flugzeuges bewirkt, daß von dem derart zweigeschossigen Rumpf keine Schwerpunktverlagerung in Flugrichtung und damit Beeinflussung der Flugeigenschaften des Flugzeuges hervorgerufen wird. Darüber hinaus hat es sich gezeigt, daß die nur bereichsweise Ausbildung eines zweigeschossigen Rumpfes des Flugzeuges symmetrisch zum Schwerpunkt desselben aerodynamisch besonders vorteilhaft ist und nur einen geringen induktiven Widerstand gegenüber der Luftströmung erzeugt.

Das erfindungsgemäße Flugzeug für Personen und/oder Frachttransport mit vergrößerter Transportkapazität ist für Unterschallgeschwindigkeit ausgelegt und weist vorteilhaft unterhalb der Rumpflängsachse beidseits des Schwerpunktes des Flugzeuges befestigte Zusatz- und Haupttragflächen auf. Zur Vergrößerung der Reisegleitzahl und des Auftriebes beim Start und der Landung und zur Erhöhung der Flugstabilität in einem breiten Bereich von Angriffs- und Seitenflugwinkel können nach einer vorteilhaften Weiterbildung der Erfindung verschiedene Werte von Anstellwinkeln der Tragflächen und des Höhenleitwerkes hinsichtlich der Horizontalen und der Rumpflängsachse in Reisekonfiguration des Flugzeuges vorgesehen sein. Vorzugsweise gehen die Anstellwinkel von den Zusatztragflächen zu den Haupttragflächen und von den Haupttragflächen zu dem Höhenleitwerk zu kleinen Werten über, so daß die Zusatztragflächen einen größeren Anstellwinkel als die Haupttragflächen und die Haupttragflächen einen größeren Anstellwinkel als das Höhenleitwerk aufweisen. Weiterhin ist es bevorzugt, daß der Anstellwinkel des Höhenleitwerkes 0 ° beträgt, während vorzugsweise der Anstellwinkel der Zusatztragflächen 4 ° und der Anstellwinkel der Haupttragflächen 2 ° beträgt, jeweils bezogen auf die Rumpflängsachse und in Reisekonfiguration. Hierdurch wird die Gleitzahl und die Längsstabilität des erfindungsgemäßen Flugzeuges gesteigert.

Eine weitere vorteilhafte Ausführungsform der Erfindung sieht vor, daß die Spannweite der Zusatztragflächen größenmäßig zwischen der Spannweite des Höhenleitwerkes und der Spannweite der Haupttragflächen liegt, wobei die Zusatztragflächen im Vergleich zu den Haupttragflächen einen vergrößerten Querflügelwinkel "V" um vorzugsweise 5 bis 10 ° aufweisen und die in Flugrichtung gesehene Außenkante am äußeren Ende der Zusatztragflächen auf einem gleichen oder höheren Niveau als die Oberfläche der Haupttragflächen angeordnet ist. Auf diese Weise ist in Verbindung mit der maximal vergrößerten Rumpflänge des erfindungsgemäßen Flugzeuges und des großen Abstandes der Zusatztragflächen von dem Schwerpunkt des erfindungsgemäßen Flugzeuges eine effektive Erhöhung der Stabilität und Trudelsicherheit des erfindungsgemäßen Flugzeuges bewirkbar. Die Zusatztragflächen und die Haupttragflächen sind vorzugsweise in einem mittleren Abstand voneinander angeordnet, die dem mindestens 5fachen der jeweiligen örtlichen Breite der Zusatztragflächen entspricht. Durch diese Abmessungen werden negative Einflüsse von Endwirbeln der die Zusatztragflächen umströmenden Luft auf die Haupttragflächen und/oder das Höhenleitwerk vermindert.

Eine weitere vorteilhafte Ausführungsform des erfindungsgemäßen Flugzeuges sieht vor, daß zur Auftriebserhöhung bei Start und Landung die Zusatztragflächen um ihre Längsachse drehbar am Rumpf, d. h. hinsichtlich der Flugzeugquerachse angeordnet sind, so daß eine Vergrößerung des Anstellwinkels der Zusatztragflächen bewirkbar ist.

Eine besonders große Erhöhung der Flugstabilität und auch maximale Vergrößerung des Innenvolumens des Rumpfes und damit die Erhöhung seiner Transportkapazität wird dadurch erreicht, daß der Rumpf auf die maximale zulässige Länge hinsichtlich Konstruktions- und Benutzungsbedingungen in erfindungsgemäßer Weise verlängert ist. Hierbei beträgt die Rumpfstreckung mindestens 12 und vorzugsweise 12 bis 14.

Sofern zur Vergrößerung der Transportkapazität des Rumpfes dieser zweigeschossig mit einem Oberdeck ausgeführt ist, wird dieses bevorzugt im Bereich zwischen den Zusatztragflächen und den Haupttragflächen beiderseits des Schwerpunktes des Flugzeugs entsprechend den Forderungen der Flächenregel vorgesehen, wodurch sich eine vorteilhafte Wellenwiderstandsverringerung des erfindungsgemäßen Flugzeuges ergibt.

Die Erfindung wird nachfolgend anhand von Ausführungsbeispielen in der Zeichnung näher erläutert. Es zeigen:
- Figur 1a: die Seitenansicht eines bekannten Flugzeugbaumusters im Vergleich mit einem vergrößerten Flugzeug gemäß der Erfindung,
- Figur 1b: im Teilschnitt die Aufsicht auf die Darstellung gemäß Figur 1a,

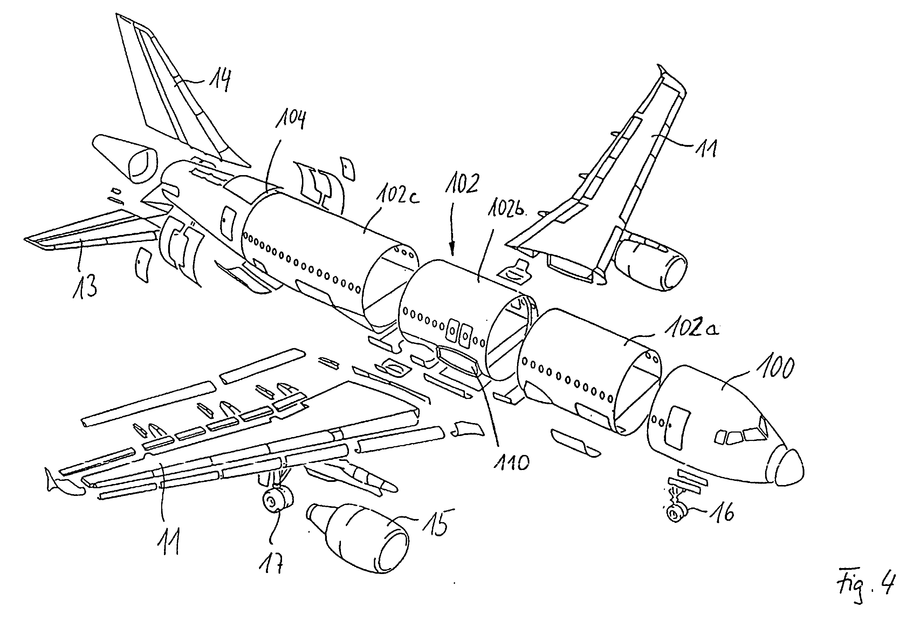

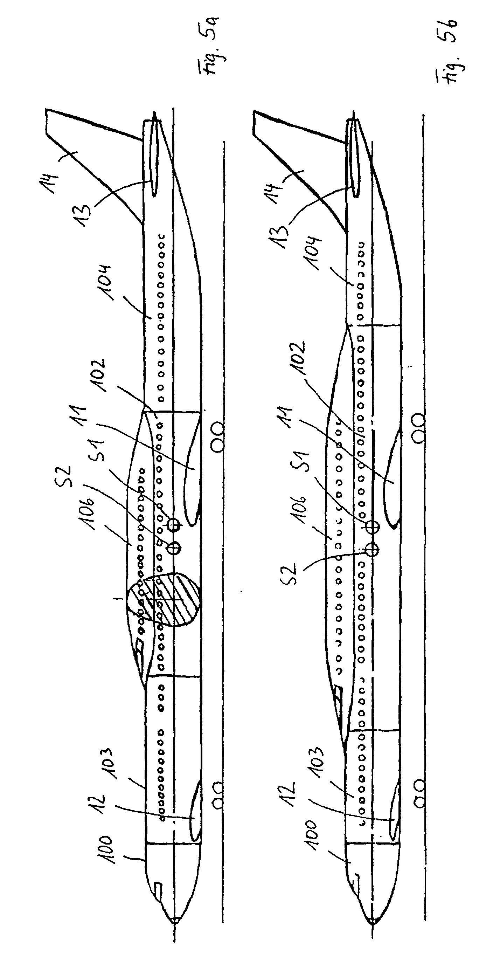

- Figur 2a: die Seitenansicht eines weiteren bekannten Flugzeugbaumusters im Vergleich mit einem vergrößerten Flugzeug gemäß der Erfindung,
- Figur 2b: im Teilschnitt die Aufsicht auf die Darstellungen gemäß Figur 2a,
- Figur 3a: die Seitenansicht eines weiteren gemäß der Erfindung vergrößerten Flugzeuges,
- Figur 3b: die Aufsicht auf das Flugzeug gemäß Figur 3a,
- Figur 3c: einen Schnitt durch das Flugzeug gemäß Pfeil X in Figur 3a,
- Figur 4: den Aufbau eines bekannten Flugzeugbaumusters mit modular aufgebautem Rumpf in einer Explosionsdarstellung,
- Figur 5a: die Seitenansicht eines weiteren Ausführungsbeispieles der Erfindung,
- Figur 5b: ein weiteres Ausführungsbeispiel der Erfindung in der Seitenansicht
- Figur 6a: die Seitenansicht eines weiteren erfindungsgemäßen Flugzeuges,
- Figur 6b: die Aufsicht auf das Flugzeug gemäß Figur 6a,
- Figur 7a: ein weiteres Ausführungsbeispiel der Erfindung in der Seitenansicht und
- Figur 7b: ein weiteres Ausführungsbeispiel der Erfindung in der Seitenansicht.

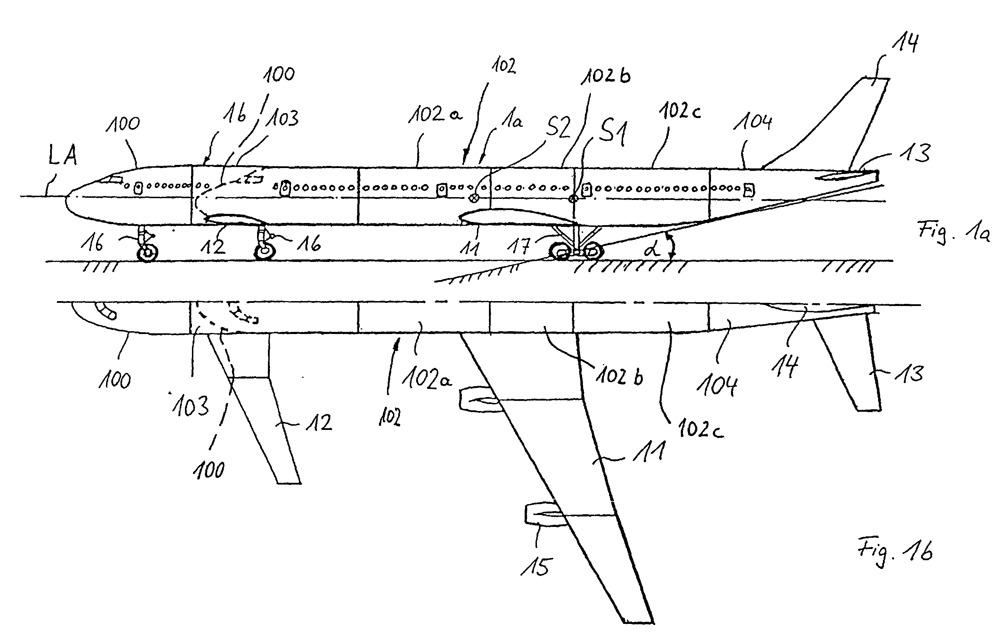

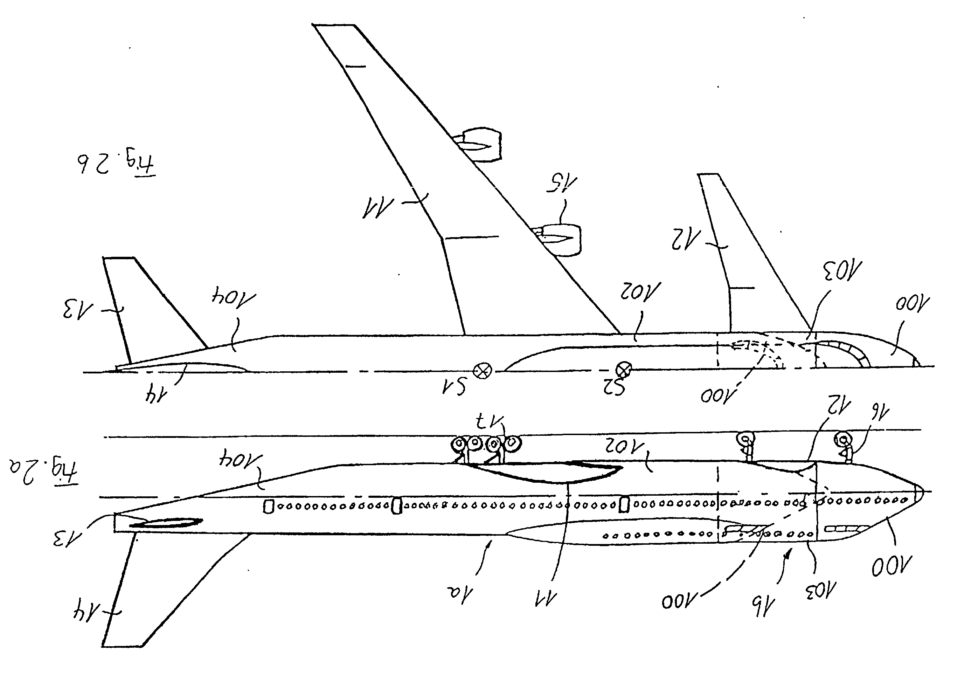

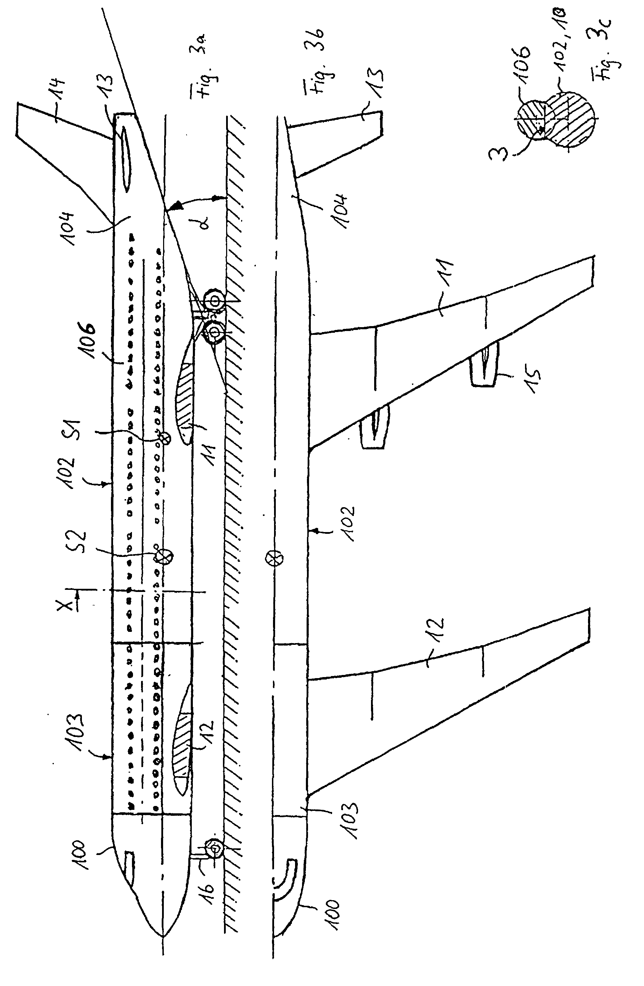

In den Figuren 1a und 1b ist ein mit 1a bezeichnetes bekanntes Flugzeugbaumuster im Vergleich zu einem Flugzeug 1b vergrößerter Transportkapazität, ausgehend von dem bekannten Flugzeugbaumuster 1a dargestellt.

Das als Ausgangsbasis dienende Flugzeugbaumuster 1a ist in konventioneller Bauweise mit einem Rumpf mit Nasensektion 100, Mittelsektion 102 und Schwanzsektion 104 sowie im Bereich der Mittelsektion 102 nahe des Schwerpunktes S1 befestigten Tragflächen 11 und im Bereich der Schwanzsektion angeordnetem Höhen- und Seitenleitwerk 13, 14 zur Erzeugung von Steuermomenten ausgestattet. Die Tragflächen 11 erzeugen den für den Flug notwendigen Auftrieb und an den Tragflächen 11 sind in bekannter Weise die Triebwerke 15 befestigt. An der Nasensektion 100 ist das Bugfahrwerk 16 und im Bereich des Schwerpunktes S1 das Hauptfahrwerk 17 angeordnet.

Um dieses bekannte Flugzeugbaumuster hinsichtlich seiner Transportkapazität zu verbessern wird vorgeschlagen, ausgehend von dem vorangehend erläuterten bekannten Flugzeugbaumuster 1a den Rumpf durch Einbau einer Zusatzsektion 103 unmittelbar anschließend an die Nasensektion 100 zu verlängern, so daß ein Flugzeug 1b vergrößerter Transportkapazität durch die zwischen der Nasensektion 100 und der Mittelsektion 102 eingefügte Zusatzsektion 103 geschaffen wird. Aufgrund der Verlängerung des Rumpfes zwischen der Nasensektion 100 und der Mittelsektion 102 wird der Schwerpunkt des Flugzeuges 1b im Vergleich zum Schwerpunkt S1 des als Ausgangsbasis dienenden Flugzeugbaumusters 1a in Flugrichtung gesehen nach vorne verlegt und ist mit S2 gekennzeichnet.

Der durch die Verlängerung des Rumpfes mittels der eingefügten Zusatzsektion 103 erforderliche zusätzliche Auftrieb des Flugzeuges 1b mit vergrößerter Transportkapazität wird dadurch erzeugt, daß im Bereich der Zusatzsektion 103 Zusatztragflächen 12 in Flugrichtung gesehen vor den nunmehr als Haupttragflächen dienenden Tragflächen 11 angeordnet werden, wobei die Haupttragflächen 11 und das Hauptfahrwerk 17 an sich unverändert gegenüber dem als Ausgangsbasis dienenden Flugzeugbaumuster 1a beibehalten werden. Die Zusatztragflächen 12 sind wiederum einem geeigneten bekannten Flugzeugbaumuster entnommen und besitzen von daher ein bereits durchkonstruiertes und berechnetes Flügelprofil.

Es ist von daher offensichtlich, daß zur Vergrößerung der Transportkapazität des als Ausgangsbasis dienenden bekannten Flugzeugbaumusters 1a lediglich der Rumpf vor dem Schwerpunkt S1 durch Einfügen einer Zusatzsektion 103 verlängert wird, was die gewünschte Vergrößerung der Transportkapazität mit sich bringt und ansonsten auf bereits berechnete Tragflächen weiterer bekannter Flugzeugbaumuster zurückgegriffen wird, so daß keine zusätzlich erforderlichen Berechnungen und damit verbundener hoher Aufwand mehr notwendig ist um den entsprechenden Auftrieb des Flugzeug 1b mit vergrößerter Transportkapazität zu erzeugen.

Sowohl die Zusatztragflächen 12 als auch die Haupttragflächen 11 sind hierbei unterhalb der mit LA bezeichneten Rumpflängsachse am Rumpf angeordnet.

Da der Rumpf des als Ausgangsbasis dienenden Flugzeugbaumusters 1a lediglich vor dem Schwerpunkt S1 zur Vergrößerung der Transportkapazität verlängert wird, bleibt der in der Figur 1a dargestellte Startwinkel α des Flugzeuges 1b gegenüber dem Flugzeugbaumuster 1a unverändert erhalten, so daß dieses Flugzeug 1 b mit vergrößerter Transportkapazität nach wie vor für das horizontale Startverfahren geeignet ist.

Die Vergrößerung des Rumpfes durch Einfügen einer Zusatzsektion 103 zwischen der Nasensektion 100 und der Mittelsektion 102 kann insbesondere bei der heute weit verbreiteten Bauweise des Rumpfes aus einzelnen Modulen auf einfache Weise durchgeführt werden, wie sich auch aus der Figur 4 ergibt. Bei dem dort dargestellten bekannten Flugzeugbaumuster, welches beispielsweise als Ausgangsbasis für ein Flugzeug 1b mit vergrößerter Transportkapazität dienen kann, ist die Nasensektion 100 von einem entsprechenden Modul gebildet, die Schwanzsektion 104 ebenfalls von einem entsprechenden Modul gebildet und die Mittelsektion 102 wird von hier drei aneinander gefügten Mittelsektionsmodulen 102a, 102b, 103c gebildet. Am Mittelsektionsmodul 102b sind überdies Befestigungselemente 110 für die Befestigung der Tragflächen 11, die beim vergrößerten Flugzeug als Haupttragflächen dienen, vorgesehen.

Zur Vergrößerung der Transportkapazität eines derartigen bekannten Flugzeugbaumusters wird eines der Mittelsektionsmodule 102a, 102b, 102c zwischen dem die Nasensektion 100 bildenden Modul und dem in Flugrichtung gesehenen ersten Mittelsektionsmodul 102a eingefügt. Vorteilhaft wird hierbei ein weiteres Mittelsektionsmodul 102b mit Befestigungsmöglichkeit 110 für Tragflächen verwendet, so daß die Befestigung der Zusatztragflächen 12 an diesem Modul, welches die Zusatzsektion 103 bildet, auf einfache Weise erfolgen kann.

Durch die Einfügung der Zusatzsektion 103 unmittelbar anschließend an die Nasensektion 100 werden die Zusatztragflächen 12 möglichst weit vor den als Haupttragflächen 11 dienenden Tragflächen angeordnet, so daß sich die Zusatztragflächen 12 und die Haupttragflächen 11 möglichst wenig hinsichtlich ihrer Umströmung gegenseitig beeinflussen können und von daher der induktive Widerstand der Tragflächen 11, 12 verringert wird.

Eine weitere Verringerung des induktiven Widerstandes der Zusatztragflächen wird dadurch erreicht, daß diese zwar von einem Flugzeugbaumuster geeigneter Größe entnommen sind, was zusätzlichen Aufwand für Neuberechnung des Flügelprofiles erübrigt, jedoch die Zusatztragflächen 12 von den am als Ausgangsbasis dienenden Flugzeugbaumuster verwendeten zusätzlichen Anbauten, wie Pylonen, Triebwerke usw. vollständig befreit sind, so daß sie "aerodynamisch rein" ausgeführt sind.

Im Ergebnis wird somit ein Flugzeug 1b gesteigerter Transportkapazität durch Einfügen einer Zusatzsektion 103 mit daran befestigten Zusatztragflächen 12 erhalten, welches innerhalb äußerst geringer Entwicklungszeit und mit geringem Aufwand durch Rückgriff auf bereits vorhandene Teile von bekannten Flugzeugbaumustern entwickelt und zur Produktionsreife gebracht werden kann und darüber hinaus die eingangs erwähnten überaus positiven Flugeigenschaften und eine verbesserte Wirtschaftlichkeit aufweist.

Anhand von einigen Beispielen bekannter Flugzeugbaumuster sollen nachfolgend die Möglichkeiten zur Vergrößerung der Transportkapazität konkretisiert werden.

### Beispiel 1

Als Ausgangsbasis gemäß den Figuren 1a und 1b dient das bekannte und mit 1a gekennzeichnete Flugzeugbaumuster vom Typ Airbus A 340-300 mit 295 Sitzen, Abflugmasse 253 500 kg, Tragfläche 362 m², Tragflächenbelastung 700 kg/m². Durch Einfügen einer Zusatzsektion 103 einer Länge von 16,4 m wird ein Flugzeug 1b mit vergrößerter Transportkapazität geschaffen, welches 439 Sitze aufweist. Der zusätzlich erforderliche Auftrieb wird durch an der Zusatzsektion 103 angebrachte Zusatztragflächen 12 erzeugt, die als durchkonstruierte und berechnete Tragflächen vom ebenfalls bekannten, kleineren Flugzeugbaumuster vom Typ Airbus A 321 entnommen sind. Es ergibt sich somit ein Flugzeug 1b vergrößerter Transportkapazität mit einer Gesamttragfläche von 484 m² bei einer Tragflächenbelastung von nur noch 665 kg/m². Aus dem Vergleich des als Ausgangsbasis dienenden Airbus A 340-300 mit einer Tragflächenbelastung von 700 kg/m² gegenüber dem vorangehend erläuterten Flugzeug vergrößerter Transportkapazität mit einer Tragflächenbelastung von nur noch 665 kg/m² ergibt sich damit, daß das Flugzeug 1b mit vergrößerter Transportkapazität trotz der gestiegenen Sitzanzahl eine Lastverringerung von 126 kg/Sitz erfährt.

Bei diesem Flugzeug 1b vergrößerter Transportkapazität werden von dem als Ausgangsbasis dienenden bekannten Flugzeugbaumuster 1a, hier Airbus A 340-300 die Tragflächen als Hauptragflächen 11, die Rumpfmodule, die Konstruktion und die Funktion von Seitenleitwerk 14 und Höhenleitwerk 13, die Lage der Haupttragflächen 11 und des Hauptfahrwerks 17 am Rumpf, das Bugfahrwerk 16 und seine Anordnung an der Nasensektion 100 und auch das horizontale Startverfahren vollständig übernommen. Das von der eingefügten Zusatzsektion 103 gebildete Nickmoment wird von den Zusatztragflächen 12 durch ihren positiven Auftrieb ausgeglichen, wobei das Restmoment, d. h. das Ausgangsnickmoment des als Ausgangsbasis dienenden Flugzeugbaumusters durch den negativen Auftrieb vom Höhenleitwerk ebenfalls ausgeglichen wird. Die Berechnungen zeigen, daß für den Fall, daß die Zusatztragflächen 12 kleiner als die Haupttragflächen 11 ausgebildet sind, Flugzeugbaumuster vergrößerter Transportkapazität mit bis zu 600 bis 650 Sitzen realisierbar sind, bei denen nach wie vor das horizontale Startverfahren ermöglicht ist.

### Beispiel 2

In diesem Ausführungsbeispiel ist als Ausgangsbasis das bekannte Flugzeugbaumuster 1a vom Typ Boeing 747-400 verwendet. Durch Einfügen einer Zusatzsektion 103 unmittelbar anschließend an die Nasensektion 100 mit einer Länge von 9,34 m wird ein Flugzeug 1b vergrößerter Transportkapazität geschaffen, welches 600 Sitzplätze aufweist. Der zusätzlich erforderliche Auftrieb wird bei unverändert vom als Ausgangsbasis 1a übernommenen Haupttragflächen 11 durch Anbringung von Zusatztragflächen 12 im Bereich der Zusatzsektion 103 aufgebracht, wobei die Zusatztragflächen 12 die Tragflächen des weiteren bekannten Flugzeugbaumusters vom Typ Boeing 757 darstellen.

### Beispiel 3

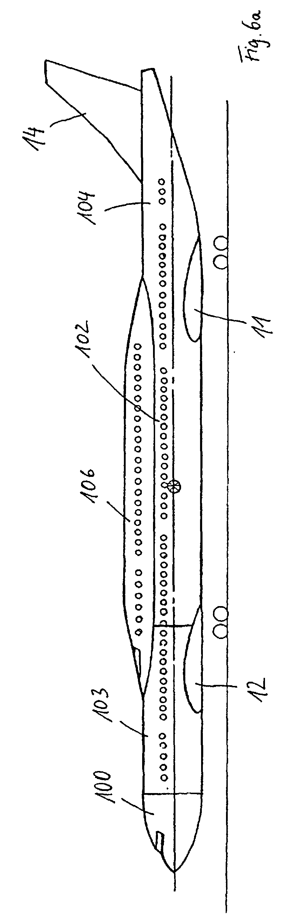

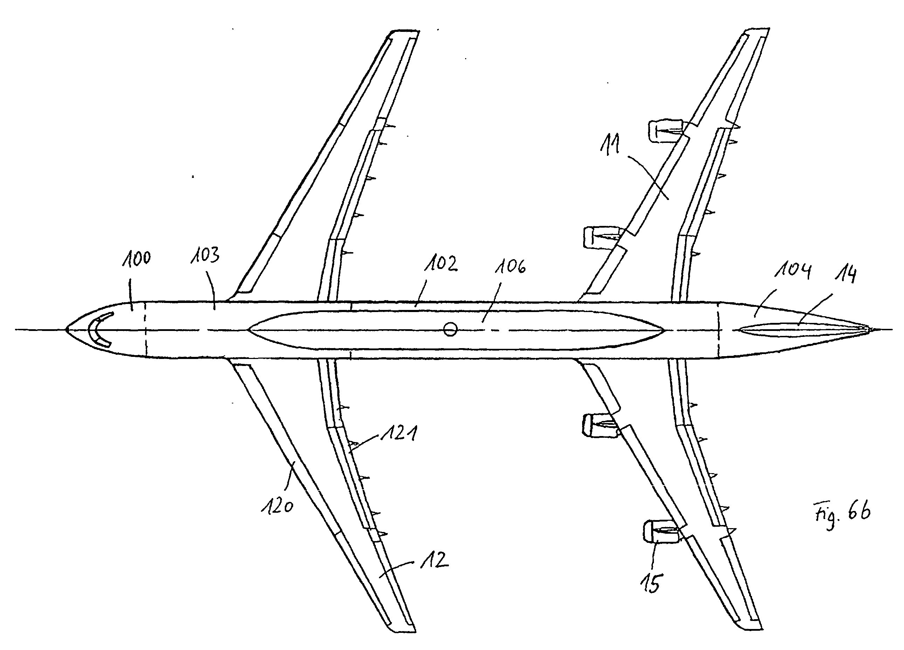

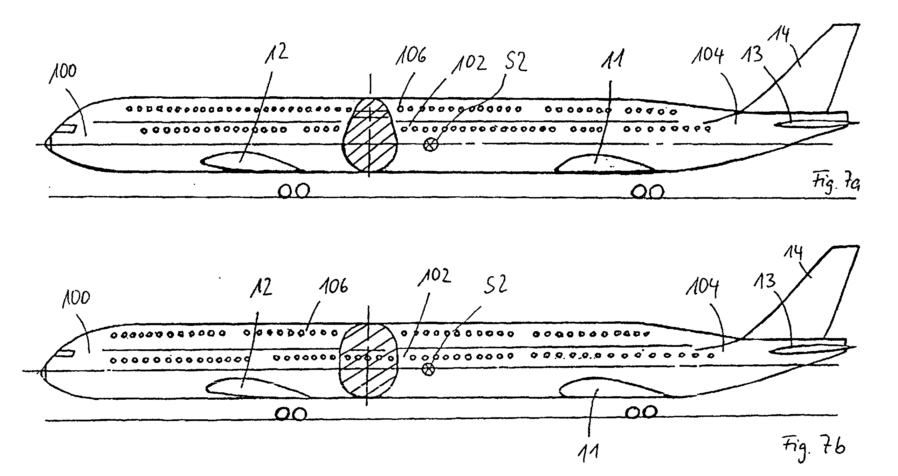

In Abwandlung des Beispieles 1 ist wiederum als Ausgangsbasis das bekannte Flugzeugbaumuster vom Typ Airbus A 340-300 gewählt, welches durch Einfügen einer Zusatzsektion 103 einen vor dem Schwerpunkt S1 verlängerten Rumpf erhält. Zur weiteren Steigerung der Transportkapazität ist der Rumpf darüber hinaus zweigeschossig mit einem zusätzlich über die gesamte Rumpflänge verlaufenden Oberdeck 106 ausgebildet. Zur Einsparung von Entwicklungsaufwand kann dieses Oberdeck 106 ebenfalls den Rumpfmodulen eines weiteren bekannten Flugzeugbaumusters entnommen sein. Im vorliegenden Ausführungsbeispiel ist das Oberdeck 106 auf Basis von Rumpfmodulen des kleineren Flugzeugbaumusters Airbus 321 zusammengesetzt, so daß sich der in der Figur 3c angedeutete 8förmige Rumpfquerschnitt des derart vergrößerten Flugzeugbaumusters ergibt. Der zusätzlich erforderliche Auftrieb für ein derartig vergrößertes Flugzeug wird durch Zusatztragflächen 12 erzeugt, die an der Zusatzsektion 103 angeordnet sind und in gleicher Größe wie die als Haupttragflächen 11 dienenden und unverändert vom als Ausgangsbasis dienenden Flugzeugbaumuster vom Typ A 340-300 übernommen sind. Auch hierbei wird durch den weitgehenden Rückgriff auf Teile bereits bekannter Flugzeugbaumuster der Entwicklungsaufwand und die damit verbundenen Kosten erheblich reduziert.

### Beispiel 4

In der Figur 5a ist eine weitere Variante des unter Beispiel 1 aufgeführten Flugzeugbaumusters vergrößerter Transportkapazität dargestellt. Hierbei wird ausgehend vom bekannten Flugzeugbaumuster vom Typ A 340-300 der Rumpf durch Einfügen einer Zusatzsektion 103 verlängert und darüber hinaus im Bereich des Schwerpunktes S2 durch Ausbildung eines zweiten Geschosses mit Oberdeck 106 auf 30 % der gesamten Rumpflänge hinsichtlich der Transportkapazität weiter gesteigert. Das Oberdeck 106 ist dabei symmetrisch zum Schwerpunkt S2 des mit verlängertem Rumpf ausgebildeten Flugzeugbaumusters angeordnet, so daß die Lage des Schwerpunktes S2 nicht beeinflußt wird und von daher auch kein Einfluß auf die Flugeigenschaften im Vergleich zum Beispiel 1 hingenommen werden muß. Es hat sich darüber hinaus gezeigt, daß die Anordnung des Oberdecks 106 symmetrisch zum Schwerpunkt S2 und im Bereich der Mittelsektion 102 des Flugzeuges einen besonders geringen induktiven Widerstand erzeugt, was sich vorteilhaft auf die Wirtschaftlichkeit des derart mit vergrößerter Transportkapazität ausgestatteten Flugzeuges auswirkt. Hierbei weist der zweigeschossige Rumpfbereich den angedeuteten etwa eiförmigen Rumpfquerschnitt auf. Das in der Figur 5a dargestellte Flugzeug weist eine Abflugmasse von 338 800 kg bei insgesamt 505 Sitzen auf. Der erforderliche Auftrieb wird durch die unverändert als Haupttragflächen 11 vom als Ausgangsbasis dienenden Flugzeugbaumuster Airbus A 340-300 mit 362 m² Flügelfläche und den als Zusatztragflächen im Bereich der Zusatzsektion 103 angebrachten und vom bekannten Flugzeugbaumuster Airbus 321 entnommenen und 122,4 qm² aufweisenden Tragflächen erzeugt, so daß sich wie schon beim Beispiel 1 eine Gesamttragfläche von 484 m² ergibt.

### Beispiel 5

In der Figur 5b ist ein im Vergleich zur Figur 5a mit verlängertem Oberdeck 106 ausgebildetes Flugzeug vergrößerter Transportkapazität dargestellt, wobei dieses Oberdeck 106 50 % der Rumpflänge bemißt und wiederum im Bereich der Mittelsektion 102 symmetrisch zum Schwerpunkt S2 angeordnet ist. Dieses Flugzeug gesteigerter Transportkapazität weist eine Abflugmasse von 340 000 kg und 601 Sitze und eine unveränderte Gesamttragfläche von 484 m² auf, die von Haupttragflächen 11 vom Flugzeugbaumuster Airbus A 340-300 und Zusatztragflächen vom Flugzeugbaumuster Airbus A 321 aufgebracht wird.

### Beispiel 6

In den Figuren 6a und 6b ist ein Flugzeug vergrößerter Transportkapazität dargestellt, welches den gleichen Rumpfaufbau wie das Beispiel 5 gemäß Figur 5b aufweist. Wie sich jedoch insbesondere auf der Aufsicht gemäß Figur 6b ergibt, sind nicht nur die Haupttragflächen 11 unverändert vom als Ausgangsbasis dienenden bekannten Flugzeugbaumuster Airbus A 340-300 übernommen, auch die Zusatztragflächen 12 sind vom bekannten Flugzeugbaumuster Airbus 340-300 übernommen, so daß sie gleiche Größe und gleiches Profil wie die Haupttragflächen 11 aufweisen. Von den Zusatztragflächen 12 sind jedoch im Vergleich zu den Haupttragflächen 11 aerodynamisch störende Anbauten, wie Triebwerke 15 und Pylonen und dergleichen mehr entfernt. Das derart ausgebildete Flugzeug vergrößerter Transportkapazität weist ein Abflugmasse von 488 700 kg bei 625 Sitzen auf, die von einer Gesamttragfläche von jeweils 362 m² von Haupttragflächen 11 und Zusatztragflächen 12, d. h. insgesamt 724 m² aufgebracht wird. Die Zusatztragflächen 12 sind darüber hinaus an der Vorderseite und Rückseite mit über die gesamte Tragflächenbreite verlaufenden Klappen, wie Krüggerklappen 120 und Querrudern 121 ausgebildet, so daß neben dem erforderlichen Auftrieb an den Zusatztragflächen 12 auch Steuermomente für das Flugzeug erzeugt werden können und auf diese Weise das beim konventionellen Flugzeug erforderliche Höhenruder 13 im Bereich der Schwanzsektion 104 entfallen kann. Bei dieser Bauart ohne Höhenruder wird der induktive Widerstand und Wellenwiderstand gegenüber der Luftströmung weiter gesenkt und der Balancierwiderstand im Reiseflug deutlich verringert. Insgesamt bringt dies eine Gleitzahlerhöhung um mindestens 20 bis 25 % mit sich, was zusammen mit der bereits erwähnten Gewichtsverminderung pro vorhandenem Sitz gewährleistet, daß die Wirtschaftlichkeit des Flugzeuges gesteigerter Transportkapazität gegenüber dem als Ausgangsbasis dienenden bekannten Flugzeugbaumuster erheblich gesteigert wird.

### Beispiel 7

In den Figuren 7a und 7b sind Flugzeuge vergrößerter Transportkapazität auf Basis des bekannten Flugzeugbaumusters Airbus A 340-300 mit gleich großen Haupttragflächen 11 und Zusatztragflächen 12 dargestellt. Der Rumpf ist zur weiteren Vergrößerung der Transportkapazität durchgängig über seine gesamte Länge zweigeschossig mit einem Oberdeck 106 ausgebildet, so daß wiederum eine symmetrische Lage zum Schwerpunkt S2 erzielt wird, gleichzeitig aber die Transportkapazität maximiert wird. Im Ausführungsbeispiel gemäß Figur 7a ist das Oberdeck 106 aus Rumpfmodulen vom kleineren bekannten Flugzeugbaumuster Airbus A 321 zusammengesetzt, wodurch sich ein Flugzeug gesteigerter Transportkapazität mit einer Abflugmasse von 506 800 kg bei 800 Sitzen und einer Gesamttragfläche von 724 m² und dem dargestellten eiförmigen Rumpfquerschnitt ergibt.

Durch Ausbildung des Oberdecks 106 aus Rumpfmodulen des als Ausgangsbasis dienenden bekannten Flugzeugbaumusters Airbus A 340-300 wird ein in beiden Geschossen gleich groß ausgebildeter Rumpf erhalten, so daß ein Flugzeug gesteigerter Transportkapazität mit einer Abflugmasse von 506 800 kg bei 900 Sitzen und einer Gesamttragfläche von 724 m² und dem dargestellten symmetrischen Rumpfquerschnitt geschaffen wird, was in der Figur 7b dargestellt ist.

In jedem Fall wird durch die vorgeschlagene Vergrößerung des Rumpfes eines als Ausgangsbasis dienenden bekannten Flugzeugbaumusters durch Einfügen einer Zusatzsektion vor dem Schwerpunkt und gegebenenfalls zumindest bereichsweise symmetrisch zum Schwerpunkt zweigeschossig aufgebautem Rumpf ein Flugzeug gesteigerter Transportkapazität erhalten, welches durch den überwiegenden Rückgriff auf Teile bereits durchkonstruierter und berechneter bekannter Flugzeugbaumuster bei erheblich reduzierten Entwicklungskosten zur Produktionsreife gebracht werden kann und darüber hinaus überaus vorteilhafte Flugeigenschaften bei gesteigerter Wirtschaftlichkeit aufweist.

## Patentansprüche

1. Flugzeug für Personen- und/oder Frachttransport auf Basis eines bekannten Flugzeugbaumusters mit einem Rumpf mit Nasensektion, Mittelsektion und Schwanzsektion und an der Mittelsektion nahe des Schwerpunktes des Flugzeuges angebrachten und entsprechend des erforderlichen Auftriebs berechneten Tragflächen und im Bereich der Schwanzsektion angeordneten Höhen- und/oder Seitenleitwerken zur Erzeugung von Stabilisierungs- und Steuermomenten, wobei zur Vergrößerung der Transportkapazität des Flugzeuges ausgehend vom vorgegebenen bekannten Flugzeugbaumuster der Rumpf desselben mittels einer zwischen der Nasensektion und dem Schwerpunkt des Flugzeugbaumusters eingefügten Zusatzsektion verlängert ist, **dadurch gekennzeichnet, daß** die Zusatzsektion in Flugrichtung gesehen vor den als Haupttragflächen dienenden Tragflächen des Flugzeugbaumusters mit als Zusatztragflächen dienenden Tragflächen ausgerüstet ist, wobei als Zusatztragflächen durchkonstruierte und berechnete Tragflächen geeigneter Größe eines bekannten Flugzeugbaumusters eingesetzt sind.

2. Flugzeug nach Anspruch 1, **dadurch gekennzeichnet, daß** der Rumpf des Flugzeuges modulartig zusammengesetzt ist und ein die Nasensektion bildendes Modul, ein die Schwanzsektion bildendes Modul, mehrere die Mittelsektion bildende Module und ein die Zusatzsektion bildendes Modul umfaßt, wobei an einem der die Mittelsektion bildenden Module die Haupttragflächen befestigt sind.

3. Flugzeug nach einem der Ansprüche 1 oder 2, **dadurch gekennzeichnet, daß** die Zusatzsektion mit den Zusatztragflächen unmittelbar an die Nasensektion anschließend ausgebildet ist.

4. Flugzeug nach einem der Ansprüche 1 bis 3, **dadurch gekennzeichnet, daß** die wirksame Flügelfläche der Zusatztragflächen kleiner bis höchstens gleich groß wie die wirksame Flügelfläche der Haupttragflächen ist.

5. Flugzeug nach einem der Ansprüche 1 bis 4, **dadurch gekennzeichnet, daß** die Zusatztragflächen mindestens 15 %, vorzugsweise mindestens 20 % zum Gesamtauftrieb des Flugzeuges beitragen.

6. Flugzeug nach einem der Ansprüche 1 bis 5, **dadurch gekennzeichnet, daß** mittels der Zusatztragflächen sowohl Auftrieb als auch Steuermomente für das Flugzeug erzeugbar sind.

7. Flugzeug nach einem der Ansprüche 1 bis 6, **dadurch gekennzeichnet, daß** zur Erhöhung des Auftriebes und der Gleitzahl die Zusatztragflächen in Flugrichtung gesehen an ihrer Vorderkante und/oder Hinterkante mit über die gesamte Breite der Zusatztragflächen verlaufenden Flügelklappen und/oder Vorflügeln, wie Krüger-Klappen, ausgerüstet sind.

8. Flugzeug nach einem der Ansprüche 1 bis 7, **dadurch gekennzeichnet, daß** die Zusatztragflächen und die Haupttragflächen unterhalb der Rumpflängsachse des Flugzeuges angeordnet sind.

9. Flugzeug nach einem der Ansprüche 1 bis 8, **dadurch gekennzeichnet, daß** die Zusatztragflächen, die Haupttragflächen und das Höhenleitwerk in Reisekonfiguration des Flugzeuges in Bezug auf die Rumpflängsachse unterschiedliche Anstellwinkel aufweisen, dergestalt, daß die Zusatztragflächen einen größeren Anstellwinkel als die Haupttragflächen und die Haupttragflächen einen größeren Anstellwinkel als das Höhenleitwerk aufweisen, wobei der Anstellwinkel des Höhenleitwerkes vorzugsweise 0 ° beträgt.

10. Flugzeug nach einem der Ansprüche 1 bis 9, **dadurch gekennzeichnet, daß** die Außenkante am äußeren Ende der Zusatztragflächen auf einem gleichen oder höheren Niveau als die Oberfläche der Haupttragflächen angeordnet ist.

11. Flugzeug nach einem der Ansprüche 1 bis 10, **dadurch gekennzeichnet, daß** die Zusatztragflächen um ihre eigene Achse drehbar am Rumpf befestigt sind, dergestalt, daß der Anstellwinkel der Zusatztragflächen bei Start und/oder Landung des Flugzeuges vergrößerbar ist.

12. Flugzeug nach einem der Ansprüche 1 bis 11, **dadurch gekennzeichnet, daß** die Zusatztragflächen einen vergrößerten Querflügelwinkel "V" um vorzugweise 5 bis 10 ° im Vergleich zu den Haupttragflächen aufweisen.

13. Flugzeug nach einem der Ansprüche 1 bis 12, **dadurch gekennzeichnet, daß** der mittlere Abstand zwischen den Haupttragflächen und den Zusatztragflächen mindestens das 5fache der örtlichen Breite der Zusatztragfläche beträgt.

14. Flugzeug nach einem der Ansprüche 1 bis 13, **dadurch gekennzeichnet, daß** die Zusatztragflächen eine Spannweite aufweisen, die zwischen der Spannweite der Haupttragflächen und der Spannweite der Höhenleitwerke liegt.

15. Flugzeug nach einem der Ansprüche 1 bis 14, **dadurch gekennzeichnet, daß** der Rumpf auf die maximale Längs hinsichtlich Konstruktions- und Benutzungsbedingungen vergrößert ist und die Rumpfstreckung mindestens 12, vorzugsweise 12 bis 14 beträgt.

16. Flugzeug nach einem der Ansprüche 1 bis 15, **dadurch gekennzeichnet, daß** zur Erhöhung der Transportkapazität der Rumpf ausgehend vom bekannten vorgegebenen Flugzeugbaumuster mindestens bereichsweise innerhalb der Mittelsektion und gegebenenfalls innerhalb der Zusatzsektion und vorzugsweise symmetrisch zum Schwerpunkt zweigeschossig ausgebildet ist.

## Claims

1. An airplane for passenger and/or freight transport based on a known aircraft design, with a fuselage with nose section, midsection and tail section, and airfoils that are secured to the midsection near the center of gravity of the airplane and calculated based on the necessary lift, as well as elevator and rudder units situated in the tail section area for generating stabilization and control moments, wherein, proceeding from the predetermined known aircraft design, the fuselage of the latter is elongated by means of an ancillary section inserted between the nose section and center of gravity of the aircraft design to increase the transport capacity of the airplane, **characterized in that** the ancillary section is equipped with airfoils serving as ancillary airfoils in front of the airfoils of the aircraft design viewed in the direction of flight, wherein fully engineered and calculated, suitably sized airfoils of a known aircraft design are used as the ancillary airfoils.

2. The airplane according to claim 1, **characterized in that** the fuselage of the airplane is modular, and consists of module forming the nose section, a module forming the tail section, several modules forming the midsection, and a module forming the ancillary section, wherein the main airfoils are secured to one of the modules forming the midsection.

3. The airplane according to one of claims 1 or 2, **characterized in that** the ancillary section with the ancillary airfoils is immediately adjacent to the nose section.

4. The airplane according to one of claims 1 to 3, **characterized in that** the effective wing surface of the ancillary airfoils is less than to at most equal to the effective wing surface of the main airfoils.

5. The airplane according to one of claims 1 to 4, **characterized in that** the ancillary airfoils contribute at least 15 %, preferably at least 20 %, to the overall lift of the airplane.

6. The airplane according to one of claims 1 to 5, **characterized in that** both lift and control moments can be generated for the airplane by means of the ancillary airfoils.

7. The airplane according to one of claims 1 to 6, **characterized in that** the ancillary airfoils are equipped with landing flaps and/or slats, e.g., Krueger flaps, at their front edge and/or back edge viewed in the flight direction over the entire width of the ancillary airfoils in order to increase the lift and lift/drag ratio.

8. The airplane according to one of claims 1 to 7, **characterized in that** the ancillary airfoils and the main airfoils are situated under the longitudinal fuselage axis of the airplane.

9. The airplane according to one of claims 1 to 8, **characterized in that** the ancillary airfoils, the main airfoils and the elevator have varying angles of incidence relative to the longitudinal fuselage axis with the airplane in travel configuration, so that the ancillary airfoils have a higher angle of incidence than the main airfoils, and the main airfoils have a higher angle of incidence than the elevator, wherein the angle of incidence of the elevator preferably measures 0°.

10. The airplane according to one of claims 1 to 9, **characterized in that** the outer edge at the outer end of the ancillary airfoils is situated at the same or higher level as the surface of the main airfoils.

11. The airplane according to one of claims 1 to 10, **characterized in that** the ancillary airfoils are secured to the fuselage so that they can pivot around their own axis, and that the angle of incidence of the ancillary airfoils can be increased during takeoff and/or landing of the airplane.

12. The airplane according to one of claims 1 to 11, **characterized in that** the ancillary airfoils have a transverse wing angle "V" enlarged preferably by 5 to 10° relative to the main airfoils.

13. The airplane according to one of claims 1 to 12, **characterized in that** the average distance between the main airfoils and the ancillary airfoils is at least 5 times the local width of the ancillary airfoil.

14. The airplane according to one of claims 1 to 13, **characterized in that** the ancillary airfoils have a wingspan lying between the wingspan of the main airfoils and the wingspan of the elevators.

15. The airplane according to one of claims 1 to 14, **characterized in that** the fuselage is enlarged to the maximum length in terms of structural and application conditions, and the fuselage extension measures at least 12, preferably 12 to 14.

16. The airplane according to one of claims 1 to 15, **characterized in that**, in order to increase the transport capacity, the fuselage has a double-deck design proceeding from known, set aircraft deigns, at least by area inside the midsection and, if necessary, inside the ancillary section, and preferably symmetrically to the center of gravity.

## Revendications

1. Avion pour transport de personnes et/ou de fret sur la base d'un modèle de construction aéronautique comprenant un fuselage avec une section formant nez, une section médiane et une section formant queue et des surfaces portantes ménagées sur la section médiane près du centre de gravité de l'avion et calculées en fonction de la portance requise et des empennages latéraux et/ou latéraux disposés dans la zone de la section formant queue pour réaliser des couples de stabilisation et de commande, pour augmenter la capacité de transport de l'avion en partant du modèle de construction aéronautique connu prédéfini, le fuselage étant prolongé au moyen d'une section supplémentaire insérée entre la section formant nez et le centre de gravité du modèle de construction aéronautique, **caractérisé en ce que** la section supplémentaire est munie vue dans le sens de vol, avant les surfaces portantes du modèle de construction aéronautique, de surfaces portantes servant de surfaces portantes supplémentaires, les surfaces portantes calculées et construites comme surfaces portantes supplémentaires de dimensions appropriées d'un modèle de construction aéronautique connu étant utilisées.

2. Avion selon la revendication 1, **caractérisé en ce que** le fuselage de l'avion est assemblé de manière modulaire et comprend un module formant nez, un module formant la section queue, plusieurs modules formant la section médiane et un module formant la section supplémentaire, les surfaces portantes principales étant fixées à l'un des modules formant la section médiane.

3. Avion selon l'une des revendications 1 ou 2, **caractérisé en ce que** la section supplémentaire est réalisée avec les surfaces portantes supplémentaires dans le prolongement direct de la section de nez.

4. Avion selon l'une des revendications 1 à 3, **caractérisé en ce que** la surface formant aile efficace des surfaces portantes supplémentaires est de dimension inférieure ou tout au plus égale à celle de la surface d'aile active des surfaces portantes principales.

5. Avion selon l'une des revendications 1 à 4, **caractérisé en ce que** les surfaces portantes supplémentaires contribuent au moins de 15 % de préférence au moins de 20 % à la portance globale de l'avion.

6. Avion selon l'une des revendications 1 à 5, **caractérisé en ce qu'**au moyen des surfaces portantes supplémentaires, la portance ainsi que des couples de commande sont réalisables pour l'avion.

7. Avion selon l'une des revendications 1 à 6, **caractérisé en ce que** pour l'augmentation de la portance et la finesse aérodynamique, les surfaces portantes supplémentaires sont équipées, vu dans le sens du vol sur bord avant et/ou arrière, de volets et/ou de becs de bord d'attaque, tels que des volets Krüger.

8. Avion selon l'une des revendications 1 à 7, **caractérisé en ce que** les surfaces portantes supplémentaires et les surfaces portantes principales sont disposés en dessous de l'axe longitudinal du fuselage de l'avion.

9. Avion selon l'une des revendications 1 à 8, **caractérisé en ce que** les surfaces portantes supplémentaires, les surfaces portantes principales et l'empennage horizontal présentent dans la configuration de voyage de l'avion par rapport à l'axe longitudinal du fuselage, des angles d'incidence différents de sorte que les surfaces portantes supplémentaires présentent un angle d'incidence plus grand que les surfaces portantes principales et les surfaces portantes principales présentent un plus grand angle d'incidence que l'empennage horizontal, l'angle d'incidence de l'empennage horizontal étant de préférence égale à 0°.

10. Avion selon l'une des revendications 1 à 9, **caractérisé en ce que** le bord externe est disposé sur l'extrémité extérieure des surfaces portantes supplémentaires sur un niveau identique ou plus élevé que la surface des surfaces portantes principales.

11. Avion selon l'une des revendications 1 à 10, **caractérisé en ce que** les surfaces portantes supplémentaires sont fixées autour de leur propre axe de manière rotative sur le fuselage de sorte que l'angle d'incidence des surfaces portantes supplémentaires peut être augmenté au décollage et/ou à l'atterrissage de l'avion.

12. Avion selon l'une des revendications 1 à 11, **caractérisé en ce que** les surfaces portantes supplémentaires présentent un angle agrandi d'aile transversal "V" de préférence de 5 à 10° en comparaison des surfaces portantes principales.

13. Avion selon l'une des revendications 1 à 12, **caractérisé en ce que** la distance médiane entre les surfaces portantes principales et les surfaces portantes supplémentaires représente au moins cinq fois la largeur locale des surfaces portantes supplémentaires.

14. Avion selon l'une des revendications 1 à 13, **caractérisé en ce que** les surfaces portantes supplémentaires présentent une envergure latérale qui est comprise entre l'envergure latérale des surfaces portantes principales et l'envergure latérale des empennages horizontaux.

15. Avion selon l'une des revendications 1 à 14, **caractérisé en ce que** le fuselage est agrandi à la longueur maximale relative aux conditions de construction et d'utilisation et l'extension de fuselage est de l'ordre d'au moins 12, de préférence de 12 à 14.

16. Avion selon l'une des revendications 1 à 15, **caractérisé en ce que** pour augmenter la capacité de transport, le fuselage est composé de deux étages en se basant sur le modèle de construction aéronautique connu prédéfini, au moins par zone à l'intérieur de la section médiane et le cas échéant à l'intérieur de la section supplémentaire et de préférence de manière symétrique par rapport au centre de gravité.
